# DEMANDE DE BREVET EUROPEEN

(11) **EP 2 260 982 A1**
(43) Date de publication de la demande: **15.12.2010**
(21) Numéro de dépôt: 10005850.2
(22) Date de dépôt: 07.06.2010
(51) Int. Cl.: B25H 1/00, B23Q 9/00, B23D 47/02, B23D 47/04

(54) **Accessoire d'usinage pour établi, procédé et utilisation dudit accessoire**

(30) Priorité: 09.06.2009 FR 0902774
(71) Demandeur: Dieu, André, 88120 Sapois (FR)
(72) Inventeur: Dieu, André, 88120 Sapois (FR)
(74) Mandataire: Munier, Laurent

(57) **Abrégé**

L'accessoire d'usinage pour établi fixe ou pliant comporte au moins un dispositif d'usinage électroportatif ou autre. Ledit dispositif d'usinage est guidé par deux glissières (5, 6) qui s'écartent, pour se mettre à la dimension du socle dudit dispositif électroportatif, avec chacune deux bielles identiques. Les bielles forment deux parallélogrammes qui sont liés par un verrou (21) les associant dans leur déplacement pour venir serrer la pièce à usiner (22). Ledit dispositif comprend un guide d'usinage qui permet d'effectuer des travaux grâce à ses deux glissières (5, 6) s'adaptant à la dimension du dispositif électroportatif et monté sur un système de parallélogramme qui est articulé sur des brides de soutien placés sous le niveau de la table de travail.

Après le travail effectué, le guide se replie en dessous du niveau supérieur des plateaux de l'établi. Il laisse libre le dessus de l'établi grâce aux quatre éléments qui se fixent sous le dessous des mors de l'établi.

Utilisation de l'accessoire d'usinage pour exécuter des travaux avec un dispositif électroportatif placé dessus la table de travail en coulissant dans les glissières (5) et (6) pour usiner une pièce (22) immobilisée par ces glissières.

## Description

La présente invention se rapporte à l'usinage de pièces.

En premier lieu, l'invention concerne des accessoires d'usinage pour établis ou ables de travail fixes ou pliantes.

Plus particulièrement, l'établi comporte des accessoires de matériels manuels d'usinage comme les dispositifs électroportatifs pour effectuer des travaux d'usinage.

Actuellemént des établis fixes ou pliants ont la particularité de recevoir un dispositif électroportatif d'usinage qui se bride sous la table de travail pour laisser apparaître sur le dessus de la table l'outil de coupe qui usinera la pièce à travailler (voir document FR 2 774 616 au nom du demandeur).

Dans cette installation les capots de protection installés sur les dispositifs électroportatifs sont dégagés. Pour protéger les parties coupantes, il est donc nécessaire de mettre sur le dessus de la table des sécurités qui se dégageront au moment de l'opération d'usinage.

Dans cette installation le dispositif d'usinage électroportatif se trouvant sous la table, la commande électrique de l'appareil est transférée sur un boitier électrique fixé sur le coté de l'établi pour être accessible à l'utilisateur. Ce boitier comporte une position marche arrêt avec coupure par manque de tension. L'alimentation de ce boitier est reliée à la source de courant ; la sortie se branche sur le cordon du dispositif électroportatif. Pour faire fonctionner ledit dispositif électroportatif, une pince de verrouillage appuie constamment sur le moyen de mise en marche de dudit dispositif électroportatif. Ledit dispositif électroportatif se trouve ainsi toujours en position de marche ; c'est l'interrupteur placé sur le coté de l'établi qui commande ledit dispositif électroportatif et protège l'utilisateur.

Les établis actuels sont pourvus de guides de coupe droits ou orientables qui coulissent dans des rainures pour maintenir la pièce dans la direction choisie pendant l'usinage.

L'utilisateur déplace la pièce à usiner.

Par le document US-4 489 634-A on connaît un accessoire d'usinage pour établi fixe ou pliant qui comporte au moins un dispositif d'usinage électroportatif, ledit dispositif d'usinage étant guidé par deux glissières qui s'écartent, pour se mettre à la dimension du socle dudit dispositif électroportatif.

La présente invention se propose de résoudre le problème et d'assurer la position correcte des glissières en les maintenant toujours parallèles à la table de travail.

Les documents US-2818892-A et FR-2888143-A divulguent des accessoires avec parallélogrammes. Mais, même si l'homme du métier combinait les accessoires avec le dispositif connu, il n'obtiendrait pas l'écartement recherché des glissières.

La présente invention palie à ces inconvénients et se **caractérise en ce que** ledit dispositif d'usinage électroportatif qui est installé sur la partie supérieure de l'établi est guidé et se déplace sur deux glissières qui s'écartent pour se mettre à la dimension du socle dudit dispositif électroportatif, avec chacune deux bielles identiques formant deux parallélogrammes qui sont liés par un verrou les associant dans leur déplacement pour venir serrer la pièce à usiner

Ainsi, lesdites glissières sont réglables pour approcher au plus près la partie à travailler.

Suivant d'autres caractéristiques :
- les glissières sont montées sur des bielles formant un parallélogramme leur géométrie en pantographe leur donnant un déplacement identique et parallèle à la table de travail grâce au verrou de liaison
- L'accessoire d'usinage possède une butée orientable donnant l'inclinaison de l'usinage à exécuter sur la pièce mise en butée ;
- l'écartement des deux rails permet le dégagement d'un capot de protection permettant d'assurer la sécurité juste au moment du commencement de l'usinage, la sécurité étant assurée directement par les protections du dispositif électroportatif.

Les établis pliants ou fixes doivent permettre l'emploi des dispositifs ou outils électroportatifs pour effectuer différents travaux sur le bois ou le métal.
Pour obtenir un travail précis, il est nécessaire de guider la pièce pendant son travail ou de guider le dispositif électroportatif pendant son déplacement.

Pour usiner en déplaçant la pièce à travailler, l'outil dépasse le dessus de la table de travail de l'établi. Le dispositif électroportatif se trouve ainsi fixé sous ladite table de travail. La partie coupante qui dépasse le dessus de la table est protégée par des capots amovibles avec la commande électrique qui se trouve ramenée sur un côté de la table.

Le dispositif électroportatif étant mis en action, l'usinage peut commencer en poussant la pièce qui passe sous le capot de protection des outils d'usinage.
Lorsque les opérations d'usinage sont effectuées pour laisser libre le dessus de la table de travail et effectuer le pliage des établis, il est nécessaire d'enlever le dispositif électroportatif qui était bridé et réglé, ainsi que les sécurités devenues inutiles.

Le dispositif décrit ci-dessus palie à ces difficultés.

Cependant, en position de repos, la glissière guide rails repose sur le dessus de l'établi présentant une gêne pour effectuer d'autres travaux qui ne demandent pas l'intervention du système de guidage.

La présente invention a pour but de résoudre ce problème en permettant de libérer le dessus de la table après l'opération de pliage du système de guidage de l'électroportatif qui se trouve ainsi en dessous du niveau supérieur de la table d'usinage.

L'accessoire d'usinage, pour atteindre ce but, comprend deux glissières (5, 6) qui sont montées sur un système de parallélogramme articulé sur des brides de soutien placés sous le niveau de la table de travail et qui forment un guide d'usinage.

De manière avantageuse, le guide d'usinage est constitué de deux glissières qui s'écartent pour se mettre à la largeur de la platine du dispositif électroportatif qui est placé en dessous du niveau supérieur de la table de travail après utilisation.

L'invention concerne encore un procédé d'usinage mettant en oeuvre un accessoire d'usinage tel que décrit ci-dessus, qui se caractérise par le maintien fixe de la pièce à usiner reste pendant l'usinage. Ainsi, l'utilisateur déplace le dispositif électroportatif pour effectuer le travail, contrairement aux procédés utilisant un dispositif électroportatif placé sous la table de travail.

Suivant une autre caractéristique, le maintien en pression de la pièce à usiner pendant l'opération d'usinage se fait grâce aux deux rails de guidage qui sont liés dans leur déplacement pour appuyer sur la pièce à usiner.

La présente invention se rapporte également aux utilisations avantageuses d'accessoires d'usinage tels que décrit ci-dessus pour :
- exécuter des travaux avec un dispositif électroportatif placé dessus la table de travail en coulissant dans les glissières pour usiner une pièce immobilisée par ces glissières ;
- monter facilement deux glissières de guidage sur des établis ayant un mors mobile permettant d'écarter à volonté ces glissières pour les mettre à la dimension des différents modèles de dispositifs électroportatifs ;
- être monté sur une table de travail fixe, les entraxes de fixation ayant été définis en tenant compte de la largeur du socle dudit dispositif électroportatif ;
- permettre à l'utilisateur d'avoir la maitrise complète dudit dispositif électroportatif en le commandant manuellement, contrairement aux établis ayant le dispositif électroportatif fixé sous la table de travail.

Les figures représentent un exemple de l'invention sur un établi avec l'utilisation d'une scie circulaire, mais cet exemple n'est pas limitatif. Le dispositif de l'invention peut être installé sur d'autres plans de travail et le matériel d'usinage peut être manuel, électrique, ou autre.
La figure 1 représente la vue de dessus d'un établi avec l'application du système de guidage d'usinage objet de l'invention.
La figure 2 représente en perspective un établi avec le système de guidage d'usinage permettant de recevoir un dispositif d'usinage électroportatif selon l'invention.
La figure 3 représente une vue en coupe du système de guidage de la figure 2. La figure 4 représente le dispositif électroportatif placé en position de coupe sur le système de guidage de la figure 2.
Les figures 5 et 6 représentent en coupe deux mors avec leurs systèmes d'articulation en position de replis et les quatre brides de soutien et de guidage d'une variante du dispositif d'usinage électroportatif selon l'invention.
La figure 7 représente la lame du dispositif électroportatif en position de travail se déplaçant sur les rails selon la variante correspondant aux figures 5 et 6.
La figure 8 est une vue de dessus de l'établi selon la variante représentée sur les figures 5, 6 et 7.

Les figures et descriptions ci-dessous feront apparaitre plus clairement à leur lecture d'autres particularités et avantage de l'invention.

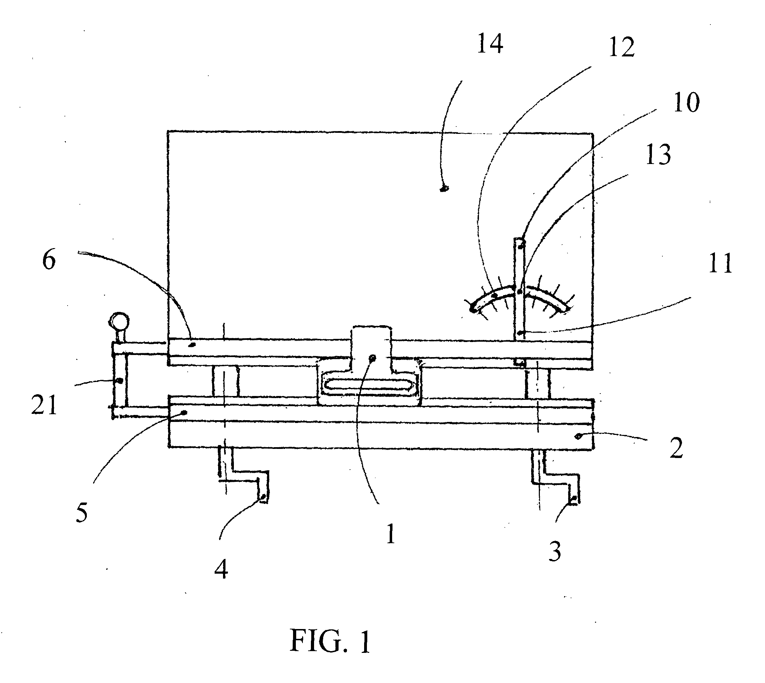

La figure 1 représente le dispositif électroportatif 1 se déplaçant sur les deux rails de guidage 5 et 6 qui sont montés sur des articulations fixées sur le mors 2 et sur le plateau 14 de l'établi. Ces deux rails sont réglables en écartement afin d'assurer un déplacement longitudinal sans jeux du dispositif électroportatif, grâce aux deux manivelles 3 et 4 qui actionnent le déplacement du mors 2. Les deux rails de guidage sont liés dans leur mouvement vertical grâce au verrou 21 qui les rend solidaires dans leurs déplacements. Un guide orientable 10 maintient la pièce à travailler 22, il pivote sur un axe 11. La rainure d'orientation graduée 12 avec son axe de serrage 13 permet de bloquer le guide 10 suivant l'angle d'usinage choisi.

Sur les figures suivantes les pièces identiques à celles représentées figure 1 ont conservé leur signe de référence.

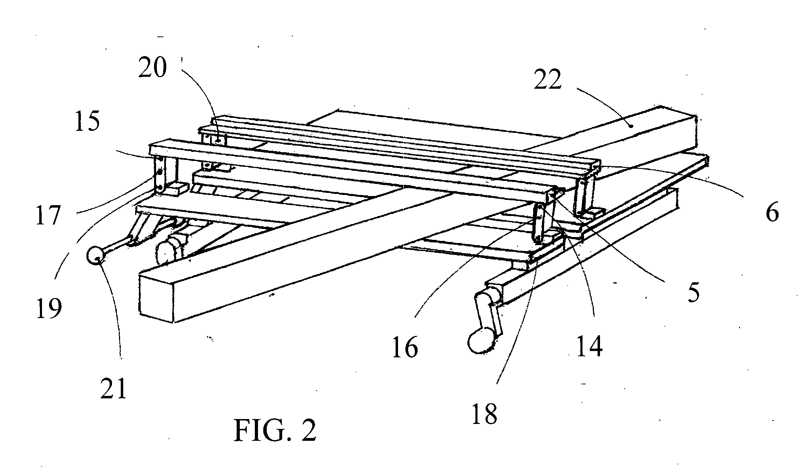

La figure 2 représente une vue en perspective du guide de coupe avec une pièce à découper 22. Le guide de coupe est composé de deux éléments identiques qui sont montés sous les glissières 5 et 6.

Le dessous de la glissière 5 possède deux axes 8 et 9 des bases de fixation 14 et 15 sur lesquels sont montées les bielles 16 et 17 aux entraxes identiques. Ces bielles sont également articulées sur les bases de fixation 18 et 19 qui se montent sur la table de travail dans les trous prévus à cet effet. Les entraxes entre 14 et 15 étant identiques aux entraxes entre 18 et 19, le parallélogramme ainsi formé se déforme normalement.

Le dessous de la glissière 6 reçoit le même montage.

Ces ensembles forment deux parallélogrammes identiques.

Après avoir réglé la position des glissières 5 et 6 en fonction de la largeur du socle du dispositif électroportatif, le verrou 21 glisse dans des logements prévus à cet effet sur les bielles 15 et 17. Ce verrou 21 assure ainsi le lien entre les deux parallélogrammes qui se déformeront ensemble pour venir serrer la pièce à usiner (22).

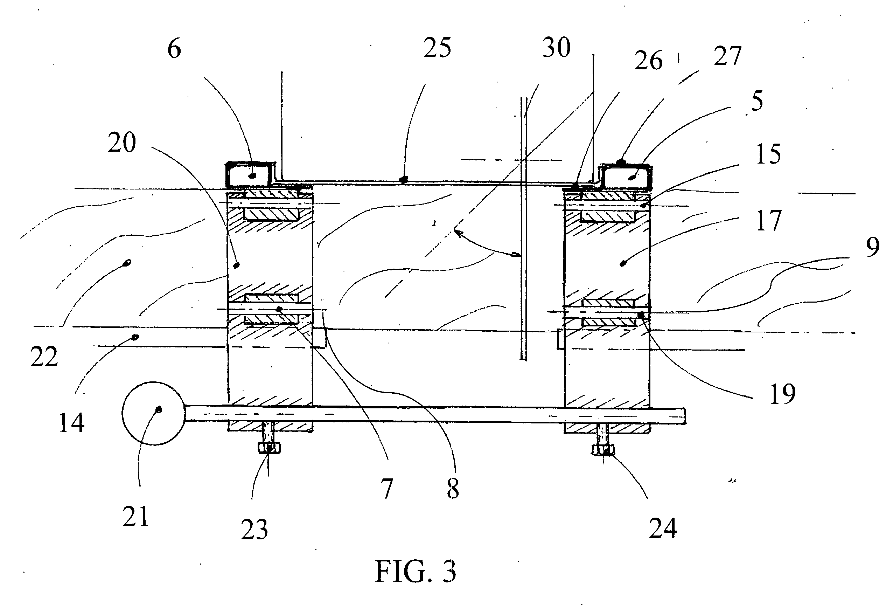

La figure 3 est une vue en coupe des bielles 17 et 20 de la figure 2 en conservant les mêmes signes de référence pour les pièces identiques, avec la coupe des deux glissières 5 et 6 du guide de travail. Le plateau de l'établi reçoit la pièce à travailler 22. L'outil de travail sur cette figure est une lame de scie inclinable qui est représentée en référence 30. Le système du parallélogramme pivote sur les axes 15 et 19 suivant l'épaisseur du matériau à travailler. La forme des glissières peut être de faible épaisseur 26 à l'endroit ou repose la semelle 25 du dispositif électroportatif et comporter un renforcement 27 pour assurer la rigidité et le guidage latéral de l'appareil pendant l'usinage tout en laissant suffisamment de place pour obtenir des inclinaisons de coupe jusqu'à 45°. Le verrou 21 liant les deux guides de travail peut être maintenu dans son écartement grâce au serrage de deux vis 23 et 24 sur les bielles 17 et 20. L'ensemble pivote autour des axes 7 et 19.

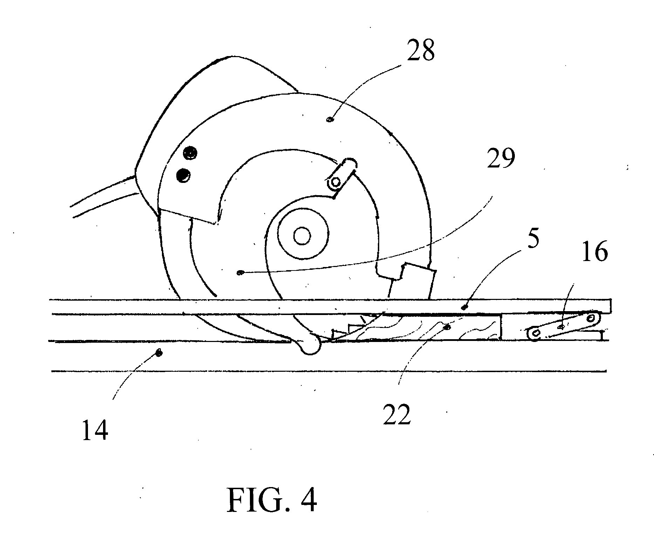

La figure 4 représente un dispositif électroportatif 28 avec scie circulaire qui coupe un matériau 22 en se déplaçant sur la glissière 5 tout en maintenant ce matériau en pression sur la table 14 selon l'axe grâce à la biellette 16 du système d'articulation des rails de guidage. Le capot de protection 29 assure la sécurité de la lame au moment de l'opération d'usinage.

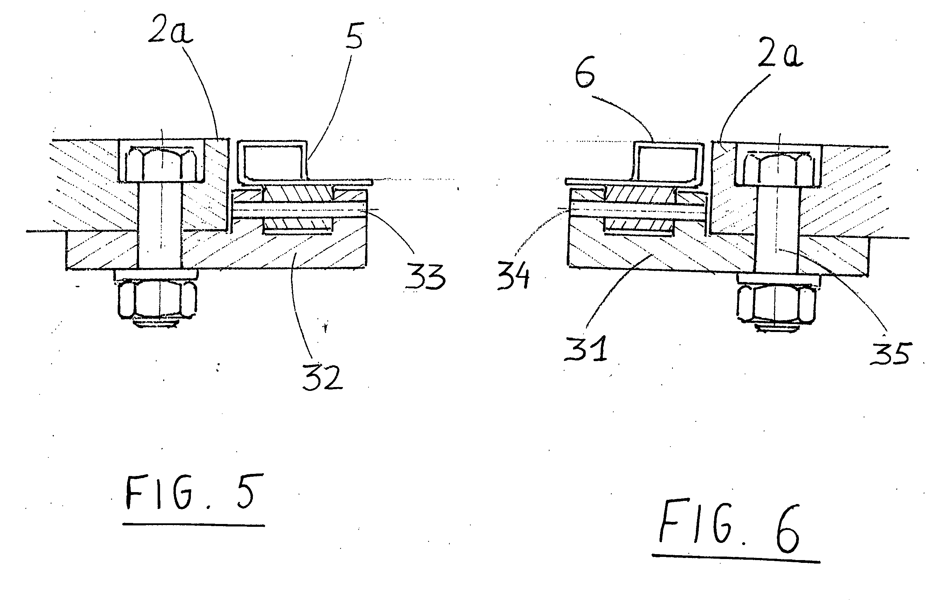

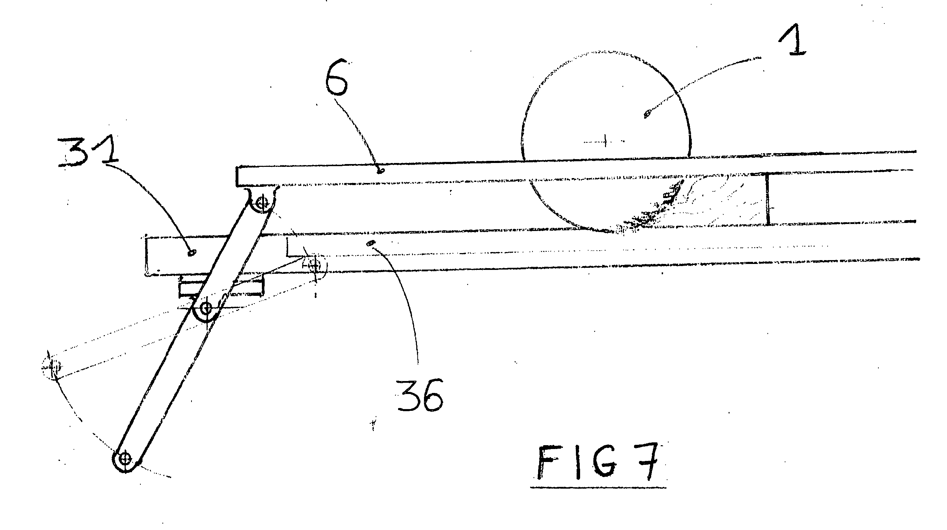

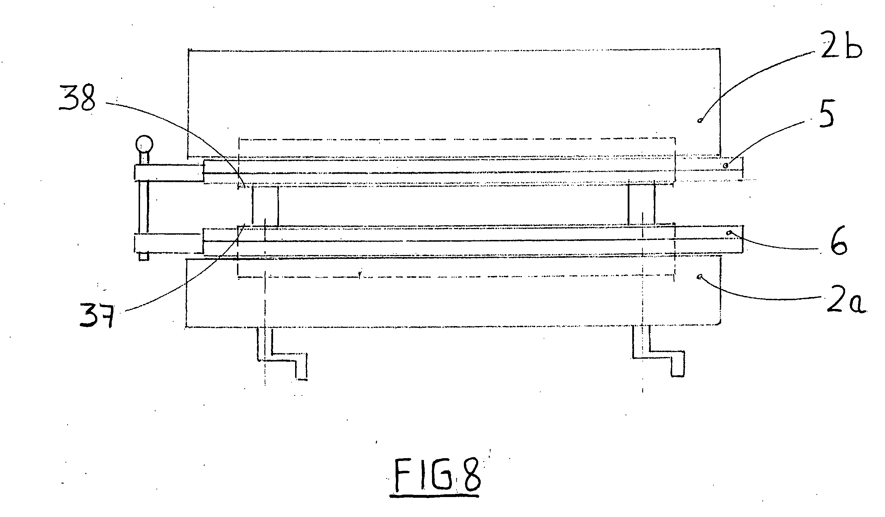

Une variante de réalisation avantageuse du dispositif selon l'invention est représentée sur les figures 5 à 8.

Sur la figure 5, deux mors 2a et 2b avec leurs systèmes d'articulation en position de replis et les quatre brides de soutien et de guidage 31 et 32 dont les axes d'articulation 33 et 32 sont placés suffisamment en dessous du niveau des mors 2a et 2b pour absorber la hauteur des glissières de guidage 5 et 6.

Ces brides de soutien 31 et 32 sont fermement maintenues par des boulons 35 ou des bridages traditionnels.

Sur la figure 6, la lame du dispositif électroportatif 1 en position de travail se déplace sur les glissières 6.

La coupe terminée, la glissière 6 prend une position de repos 36 qui se trouve en dessous du niveau supérieur du mors 31. Dans cette position, le dessus de l'établi permet d'autres utilisations.

Les deux glissières de guidage 5 et 6 qui sont représentées sur la fig. 3 sont montées entre les mors de l'établi 2a et 2b limitent la fonction serrage des mors.

Pour maintenir fermement serrées les pièces à travailler, les deux mors 37 et 38 sont fixés sous la partie inférieure des mors 2a et 2b.

Ces deux mors dépassent légèrement les guides 5 et 6 pour être certain qu'un serrage même puissant ne vienne déformer les guides pour dispositif électroportatif.

Ledit dispositif comprend un guide d'usinage qui permet d'effectuer des travaux grâce à ses deux glissières 5 et 6 s'adaptant à la dimension du dispositif électroportatif et monté sur un système de parallélogramme qui est articulé sur des brides de soutien placés sous le niveau de la table de travail.

Après le travail effectué, le guide se replie en dessous du niveau supérieur des plateaux de l'établi. Il laisse libre le dessus de l'établi grâce aux quatre éléments qui se fixent sous le dessous des mors de l'établi.

Selon d'autres étapes avantageuses de l'invention :
- lesdits ensembles de parallélogramme ont la particularité de s'écarter ou de se rapprocher pour se mettre à la largeur des platines des électroportatifs. Les deux poignées qui manoeuvrent des mors 2 de l'établi assurent un réglage précis de l'écartement des glissières 5, 6 qui guident le dispositif électroportatif 1 ou 28 ;
- après ce réglage une barre coulissante sert de verrou pour lier les deux glissières 5, 6 dans leur écartement et déplacements afin d'assurer la stabilité et la précision de l'usinage avec le dispositif électroportatif 1 ;
- cette barre de verrou est placée suffisamment basse pour permettre le passage des lames de scie ou des différents outils des dispositifs électroportatifs ;
- suivant l'épaisseur du matériau à usiner, le déplacement de l'ensemble des deux glissières 5, 6 est conditionné par le système de parallélogramme qui se déforme à volonté, notamment pour introduire la pièce à usiner 22 ;
- les glissières de guidage 5, 6 du dispositif électroportatif 1 peuvent appuyer sur la partie à usiner afin de la maintenir pendant l'opération d'usinage ;
- la butée orientable graduée fixée sur la table de l'établi donne l'inclinaison précise de l'usinage à effectuer ;
- la pièce à usiner 22 reste fixe pendant l'opération d'usinage, c'est le déplacement du dispositif électroportatif 1 qui assure le travail à réaliser avec plus de précision en comparaison avec un déplacement de la pièce à usiner 22 ;
- le dispositif électroportatif 1 n'a plus besoin d'être immobilisé sous la table de travail, il reste disponible pour effectuer d'autres travaux ;
- le dispositif électroportatif se branche directement sur la prise de courant, c'est l'utilisateur qui a ledit dispositif électroportatif en main, il gère son utilisation, son déplacement, sa mise en route ou son arrêt. ;
- les glissières 5, 6 de guidage ont une épaisseur très réduite, inférieure à celle des platines servant à fixer les dispositifs électroportatifs 1 sous la table de travail. L'outil 30 du dispositif électroportatif 1 est utilisé au maximum de ses possibilités ;
- les glissières 5, 6 qui supportent le socle du dispositif électroportatif sont suffisamment écartées pour permettre l'inclinaison de la lame ou des outils d'usinage des dispositifs électroportatifs 1.

Bien que l'invention ait été décrite en liaison avec des structures particulières, elle n'y est nullement limitée et on peut y apporter de nombreuses variantes, tels que d'autres outils de coupe, forets, fraises ou couteaux, ne sortent pas du cadre de l'invention.

Les combinaisons des différentes réalisations représentées sur les dessins ou décrites ci-dessus ne sortent pas du cadre de l'invention.

### Signes de référence

1. dispositif électroportatif
2. mors
2a mors
2b mors
3. manivelle
4. manivelle
5. glissière
6. glissière
7. base de fixation
8. axe
9. axe
10. guide orientable
11.axe
12. rainure d'orientation graduée
13. axe de serrage
14. axe
15. axe
16. bielle
17. bielle
18. base de fixation
19. base de fixation
20. bielle
21. verrou de liaison
22. pièce à usiner
23. boulon
24. boulon
25. semelle
26. épaisseur
27. renforcement
28. dispositif électroportatif
29. capot de protection
30. outil
31. brides de soutien et guidage
32. brides de soutien et guidage
33. axe d'articulation
34. axe d'articulation
35. boulon
36. position de repos de la glissière 6
37. mors
38. mors

Les signes de référence insérés après les caractéristiques techniques mentionnées dans les revendications ont pour seul but de faciliter la compréhension de ces dernières et n'en limitent aucunement la portée.

## Revendications

1. Accessoire d'usinage pour établi fixe ou pliant qui comporte au moins un dispositif d'usinage électroportatif (1) ou autre, **caractérisé en ce que** ledit accessoire d'usinage est guidé par deux glissières (5 et 6), parties constituantes dudit accessoire d'usinage, lesdites glissières s'écartant, pour se mettre à la dimension du socle dudit dispositif électroportatif, avec chacune deux bielles identiques formant deux parallélogrammes qui sont liés par un verrou (21) les associant dans leur déplacement pour venir serrer la pièce à usiner (22).

2. Accessoire d'usinage selon la revendication 1, **caractérisé en ce que** les glissières (5) et (6) sont montées sur des bielles formant un parallélogramme leur géométrie en pantographe leur donnant un déplacement identique et parallèle à la table de travail grâce au verrou de liaison (21).

3. Accessoire d'usinage selon l'une des revendications précédentes, **caractérisé en ce qu'**il possède une butée orientable (10) donnant l'inclinaison de l'usinage à exécuter sur la pièce (22) mise en butée.

4. Accessoire d'usinage selon l'une des revendications précédentes, **caractérisé en ce que** l'écartement des deux rails permet le dégagement d'un capot de protection (29) permettant d'assurer la sécurité juste au moment du commencement de l'usinage, la sécurité étant assurée directement par les protections du dispositif électroportatif.

5. Accessoire d'usinage selon l'une des revendications précédentes **caractérisé en ce que** les deux glissières (5, 6) étant montées sur un système de parallélogramme articulé sur des brides de soutien, placé sous le niveau de la table de travail forment un guide d'usinage.

6. Accessoire d'usinage selon l'une des revendications précédentes **caractérisé en ce que** ledit guide d'usinage, constitué de deux glissières (5, 6) qui s'écartent pour se mettre à la largeur de la platine du dispositif électroportatif, est placé en dessous du niveau supérieur de la table de travail après utilisation.

7. Accessoire d'usinage selon l'une des revendications précédentes **caractérisé en ce que** les deux mors (2a et 2b) avec leurs systèmes d'articulation en position de replis et les quatre brides de soutien et de guidage (4) et (5) dont les axes d'articulation (2 et 3) sont placées suffisamment en dessous du niveau des mors (2a et 2b) pour absorber la hauteur des glissières de guidage (5 et 6) ; en particulier ces soutiens (4 et 5) sont fermement maintenus par des boulons (1) ou des bridages traditionnels.

8. Accessoire d'usinage selon la revendication précédente **caractérisé en ce que** la glissière (6) est apte à prendre une position de repos (19) qui se trouve en dessous du niveau supérieur du mors (4).

9. Accessoire d'usinage selon l'une des revendications 7 ou 8 **caractérisé en ce** les deux mors (17 et 18) sont fixés sous la partie inférieure des mors (7 et 8) pour maintenir fermement serrées les pièces à travailler, typiquement, lesdits deux mors dépassant légèrement les glissières (5 et 6).

10. Procédé d'usinage mettant en oeuvre un accessoire d'usinage selon l'une des revendications précédentes, **caractérisé par** le maintien fixe de la pièce à usiner (22) pendant l'étape d'usinage, l'utilisateur déplaçant le dispositif électroportatif (28) pour effectuer le travail.

11. Procédé d'usinage mettant en oeuvre un accessoire d'usinage selon la revendication 2, **caractérisé par** le maintien en pression de la pièce à usiner (22) pendant l'étape d'usinage grâce aux deux rails de guidage (5) et (6) qui sont liés dans leur déplacement pour appuyer sur la pièce à usiner (22).

12. Utilisation d'un accessoire d'usinage selon l'une des revendications 1 à 9 pour exécuter des travaux avec un dispositif électroportatif placé dessus la table de travail en coulissant dans les glissières (5) et (6) pour usiner une pièce (22) immobilisée par ces glissières.

13. Utilisation d'un accessoire d'usinage selon l'une des revendications 1 à 9 pour monter facilement deux glissières de guidage (5) et (6) sur des établis ayant un mors mobile permettant d'écarter à volonté ces glissières pour les mettre à la dimension des différents modèles de dispositifs électroportatifs.

14. Utilisation d'un accessoire d'usinage selon l'une des revendications 1 à 9 pour être monté sur une table de travail fixe, les entraxes de fixation ayant été définis en tenant compte de la largeur du socle dudit dispositif électroportatif.

15. Utilisation d'un accessoire d'usinage selon l'une des revendications 1 à 9 pour permettre à l'utilisateur d'avoir la maitrise complète dudit dispositif électroportatif en le commandant manuellement, contrairement aux établis ayant le dispositif électroportatif fixé sous la table de travail.
